# EUROPEAN PATENT APPLICATION

(11) **EP 4 696 544 A1**
(43) Date of publication of application: **18.02.2026**
(21) Application number: 24919672.6
(22) Date of filing: 31.07.2024
(51) Int. Cl.: B60L 53/16, B60L 53/62, B60L 53/60

(54) **CHARGING APPARATUS AND OPERATION METHOD THEREFOR**

(30) Priority: 24.01.2024 US 202463624549 P
(71) Applicant: DELTA ELECTRONICS, INC., Taoyuan City 320023 (TW)
(72) Inventor: HUANG, Wei-Te, Taoyuan City Taiwan 320023 (CN); LEE, Ming-Che, Taoyuan City Taiwan 320023 (CN); CHIEN, Wei-Hung, Taoyuan City Taiwan 320023 (CN); LI, Kui-Yi, Taoyuan City Taiwan 320023 (CN)
(74) Representative: 2K Patentanwälte Blasberg Kewitz & Reichel
(86) International application number: PCT/CN2024/108757
(87) International publication number: WO 2025/156589

(57) **Abstract**

A charging device is coupled to a first electric vehicle, and the charging device includes a first connection device and a power device. The first connection device includes a first power wire, a first control pilot wire, and a first proximity pilot wire. The power device includes a switch, a controller, and a resistor. When the controller is activated by receiving a first working power provided by the first electric vehicle through the first control pilot wire, the controller controls the switch to disconnect the first control pilot wire and the first proximity pilot wire, and the resistor is coupled to the first proximity pilot wire through the action of the switch to adjust an impedance of the first proximity pilot wire to a first specific impedance, and the first specific impedance is provided for the first electric vehicle to know an operation mode currently to be executed.

## Description

### CROSS-REFERENCE TO RELATED APPLICATION

This application claims the benefit of United States Provisional Patent Application No. 63/624,549 filed Jan. 24, 2024, and entitled "UNIVERSAL CHARGING CABLE FOR ELECTRIC VEHICLE AND CHARGER". The entire disclosures of the above application are all incorporated herein by reference.

### TECHNICAL FIELD

The present disclosure relates to a charging device and a method of operating the same, and more particularly to a universal charging device and a method of operating the same.

### BACKGROUND

The statements in this section merely provide background information related to the present disclosure and do not necessarily constitute prior art.

At present, electric vehicles are gradually replaced by electric drive from fuel drive in pursuit of energy conservation and carbon reduction. In particular, the power source of electric vehicles is batteries, and therefore the batteries need to be charged to maintain the endurance of electric vehicles. On the other hand, since the batteries in electric vehicles can be used to store electricity, when the battery power is sufficient, the battery power can also be used to feedback and supply external devices for emergency use. In previous electric vehicle chargers, electric vehicle charging/discharging belong to different products, and the products are diverse, resulting in the requirement for chargers to use specific communication manners to notify electric vehicles to operate in specific charging and discharging modes based on their own capabilities. Therefore, the charging and discharging equipment of electric vehicles usually needs to use dedicated charging cables to execute dedicated operation modes. Accordingly, for each charging and discharging device, a dedicated charging cable needs to be used to execute a dedicated mode, resulting in increased configuration costs, inconvenience in carrying at the same time, and waste of a lot of copper wires.

On the other hand, when the battery power of the electric vehicle is used to urgently supply power to the external device, the external device has no power source since the battery power of the electric vehicle has not yet been provided. Therefore, the external device cannot communicate with the electric vehicle to set the charging and discharging mode. If the external device is to be used to set and adjust the operation mode, an additional power source (such as but not limited to, an additional battery, external power supply, etc.) is required to temporarily start the device used to communicate with the electric vehicle. Accordingly, it will cause inconvenience in use and difficulty in setting the operation mode.

Therefore, how to design a charging device and a method of operating the same so that the controller inside the power device does not need to use an additional power source to activate has become a critical topic in this field.

### SUMMARY

In order to solve the above-mentioned problems, the present disclosure provides a charging device. The charging device includes a first connection device. The first connection device includes a first power wire, a first control pilot wire, and a first proximity pilot wire. A first terminal of the first power wire, a first terminal of the first control pilot wire, and a first terminal of the first proximity pilot wire are coupled to a first electric vehicle. The charging device further includes a power device. The power device is coupled to a second terminal of the first power wire, a second terminal of the first control pilot wire, and a second terminal of the first proximity pilot wire. The power device includes a switch, a controller, and a resistor. The switch is coupled to the first proximity pilot wire. The controller is coupled to the first power wire and the first control pilot wire, and when the controller is disabled, the switch short-circuits the first control pilot wire and the first proximity pilot wire. The resistor is coupled to the controller. When the controller is activated by receiving a first working power provided by the first electric vehicle through the first control pilot wire, the controller controls the switch to disconnect the first control pilot wire and the first proximity pilot wire, and the resistor is coupled to the first proximity pilot wire through the action of the switch to adjust an impedance of the first proximity pilot wire to a first specific impedance, and the first specific impedance is provided for the first electric vehicle to know an operation mode currently to be executed.

In order to solve the above-mentioned problems, the present disclosure provides a method of operating a charging device. The charging device includes a first connection device and a power device, and the power device includes a resistor. The method includes steps of: short-circuiting a first control pilot wire and a first proximity pilot wire of the first connection device when there is no first working power; receiving the first working power provided by a first electric vehicle through the first control pilot wire when the first connection device is coupled to the first electric vehicle; disconnecting the first control pilot wire and the first proximity pilot wire according to the first working power, and coupling the resistor to the first proximity pilot wire; adjusting an impedance of the first proximity pilot wire to a first specific impedance by coupling the resistor to the first proximity pilot wire, and providing the first specific impedance for the first electric vehicle to know the operation mode currently to be executed.

The main purpose and effect of the present disclosure is that the charging device uses the electric vehicle to first supply power to the controller inside the power device through the charging cable in the discharging operation mode. After the controller is activated, the switching of the switch is controlled to obtain a specific impedance so that the electric vehicle can know the operation mode currently to be executed according to the specific impedance. Therefore, the controller inside the power device can be activated without using an additional power source, thereby saving equipment costs and increasing convenience of use.

It is to be understood that both the foregoing general description and the following detailed description are exemplary, and are intended to provide further explanation of the present disclosure as claimed. Other advantages and features of the present disclosure will be apparent from the following description, drawings, and claims.

### BRIEF DESCRIPTION OF DRAWINGS

The present disclosure can be more fully understood by reading the following detailed description of the embodiment, with reference made to the accompanying drawing as follows:
FIG. 1A is a schematic diagram of an application configuration of a universal charging device according to the present disclosure.
FIG. 1B is a structural appearance diagram of a universal charging wire according to the present disclosure.
FIG. 2 is a schematic diagram of an internal circuit of a charging cable according to the present disclosure.
FIG. 3A is a schematic diagram of the universal charging device applied to an internal circuit for a V2L operation mode according to the present disclosure.
FIG. 3B is a schematic diagram of the universal charging device applied to an internal circuit for a V2H operation mode according to the present disclosure.
FIG. 3C is a schematic diagram of the universal charging device applied to an internal circuit for a V2V operation mode according to the present disclosure.
FIG. 3D is a schematic waveform timing diagram of the universal charging device operating in a discharging mode according to the present disclosure.
FIG. 4A is a schematic diagram of the universal charging device applied to an internal circuit for a M2 operation mode according to the present disclosure.
FIG. 4B is a schematic diagram of the universal charging device applied to an internal circuit for a M3 operation mode according to the present disclosure.
FIG. 5 is a flowchart of a method of operating the charging device according to the present disclosure.

### Description of Reference Numerals in Drawings

100: charging device
1, 3: charging cable
1A: vehicle-side connector
1B: pluggable connector
1C: cable
1D: integrated vehicle-side connector
L: live wire
N: ground wire
PE: neutral wire
P, P1, P2: power wire
CP, CP1, CP2: control pilot wire
PP, PP1, PP2: proximity pilot wire
12: trigger circuit
R6, R7: resistor
S3: push switch
14: LED indicator light
2: power device
2A: device connector
SW: switch
MCU: controller
Ecp: control pilot terminal
Ecp1: first control pilot terminal
Ecp2: second control pilot terminal
Epp: proximity pilot terminal
Epp1: first proximity pilot terminal
Epp2: second proximity pilot terminal
Eps: power receiving terminal
RP: resistor
22: socket port
24: USB port
26: conversion circuit
SWp: power switch
200: electric vehicle
200-1: first electric vehicle
200-2: second electric vehicle
200A: vehicle connector
300: extension plug
400: home
Ps: supplying power
Tg: trigger
Sp: communication signal
VCC1: first working power
VCC2: second working power
L1: solid line
L2: dotted line
t0-t3: time
Vx: specific potential

### DETAILED DESCRIPTION

Reference will now be made to the drawing figures to describe the present disclosure in detail. It will be understood that the drawing figures and exemplified embodiments of present disclosure are not limited to the details thereof.

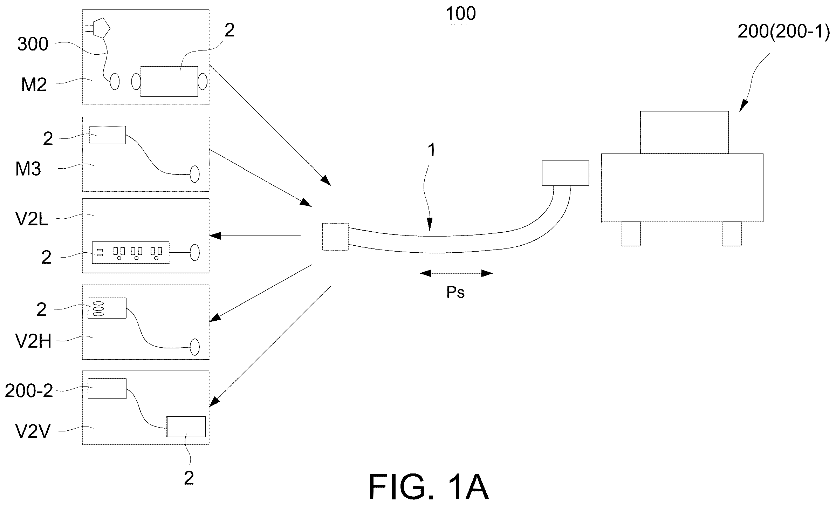

Please refer to FIG. 1A, which shows a schematic diagram of an application configuration of a universal charging device according to the present disclosure. The universal charging device 100 (hereinafter abbreviated as "charging device 100") is mainly used in charging modes such as, but not limited to, Mode 2 (M2) and Mode 3 (M3), wherein the direction of the arrow indicates charging of an electric vehicle 200, and is also used in discharging modes such as, but not limited to, vehicle to load (V2L), vehicle to home (V2H), and vehicle to vehicle (V2V), wherein the direction of the arrow indicates discharging of the electric vehicle 200 to a charging wire. The charging device 100 of the present disclosure mainly utilizes a single universal charging cable 1 (hereinafter abbreviated as "charging cable 1") to plug in power devices 2 of various operation modes so that the electric vehicle 200 and the power devices 2 can know the applied operation mode through handshake communication with each other, and perform corresponding charging and discharging operations accordingly.

Specifically, the operation mode of M2 is a charging mode, which operates between the extension plug 300 and the electric vehicle 200 of the charging device 100. The power device 2 may be, for example but not limited to, a charger such as IC-CPD (in-cable control and protection device). The power device 2 can establish communication with the electric vehicle 200 through the charging cable 1 to set various power parameters for charging the electric vehicle 200 (such as but not limited to, the upper limit of the charging current, the charging time, etc.). Therefore, the power device 2 can receive an AC power provided a the power grid by plugging the extension plug 300 into a socket, and can provide a supplying power Ps to the electric vehicle 200 according to the power parameters. The operation mode of M3 is also a charging mode, which mainly couples the electric vehicle 200 to the power device 2, such as an AC charging pile or a wall-mounted charging device through the charging cable 1 so that the power device 2 can establish communication with the electric vehicle 200 through the charging cable 1 to set various parameters for charging the electric vehicle 200 (such as but not limited to, the upper limit of the charging current, the charging time, etc.). Therefore, the power device 2 receives the AC power provided by the power grid and can provide the supplying power Ps to the electric vehicle 200 according to the power parameters.

On the other hand, the operation mode of V2L is a discharging mode, which is mainly that one terminal of the charging cable 1 may be coupled to the power device 2 such as a power socket, and the other terminal can be coupled to the electric vehicle 200. Therefore, the electric vehicle 200 can provide the supplying power Ps to the power device 2 through the charging cable 1, and the power device 2 may include, for example but not limited to, power output ports such as sockets and USB ports to supply power to a load (not shown) coupled to the power device 2. The operation mode of V2H is a discharging mode, which is mainly that one terminal of the charging cable 1 may be coupled to the power device 2 such as an emergency power socket, and the other terminal is coupled to the electric vehicle 200. When a household AC power is out of power, the electric vehicle 200 can provide the supplying power Ps to the power device 2 by coupling the charging cable 1 to the power device 2 to provide an emergency AC backup power. The operation mode of V2V is a discharging mode, which is mainly that one terminal of a charging wire may be coupled to a first electric vehicle 200-1 that provides power through the power device 2 such as a connector, and the other terminal may be coupled to a second electric vehicle 200-2 that receives power through the charging cable 1. Therefore, the first electric vehicle 200-1 can provide the supplying power Ps to the charging cable 1 through the power device 2 so as to provide the supplying power Ps to the second electric vehicle 200-2 through the charging cable 1 to provide a backup power to the second electric vehicle 200-2.

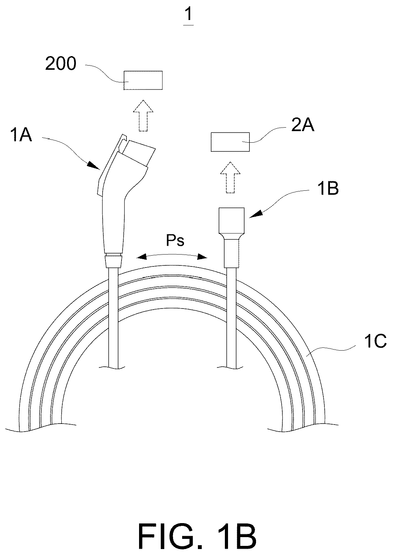

Please refer to FIG. 1B, which shows a structural appearance diagram of a universal charging wire according to the present disclosure. In FIG. 1B, the left half of the connector 1A is a vehicle-side connector and is used to plug in the electric vehicle 200 (or the first electric vehicle 200-1). The right half of the connector 1B is a pluggable connector and is used to plug in an adapter of various power devices 2 shown in FIG. 1A. A cable 1C is coupled between two connectors 1A, 1B, and according to the thickness of the cable 1C, the cable 1C can be suitable for withstanding different supplying powers Ps (for example but not limited to, its thickness may be different and can withstand 9.6 kW, 11 kW, etc.). In addition, the length of the cable 1C may also be adjusted according to requirements of the user (for example, but not limited to 5/6/7 m). Therefore, the charging cable 1 disclosed in the present disclosure can provide users with a variety of choices.

Please refer to FIG. 1A and FIG. 1B again, the charging cable 1 disclosed in the present disclosure includes a pluggable connector 1B, a cable 1C, and a vehicle-side connector 1A. The charging cable 1 may be respectively connected to a device connector 2A of the power device 2 of M2, M3, V2L, V2H, and V2V through the pluggable connector to form the charging device 100, and provide a predetermined charging and discharging function according to the plugged power device 2. In particular, in the operation modes of V2L, V2H, and V2V, the power device 2 is usually the receiving terminal and generally cannot provide power. Moreover, when the charging device 100 has not completed the handshake communication with the electric vehicle 200 (or the first electric vehicle 200-1) at a power-supplying side, the electric vehicle 200 (or the first electric vehicle 200-1) at the power-supplying side will not first provide the supplying power Ps to the power device 2. Therefore, an internal controller (not shown) of the power device 2 has not been activated and cannot operate smoothly without an additional power source. Under the condition that the power device 2 cannot operate smoothly, it means that the power device 2 cannot adjust the operation mode to the discharging mode (i.e., V2L, V2H, V2V), and therefore it causes difficulties in setting the operation mode. In addition, if the power device 2 is to be used to set and adjust the operation mode, an additional power source (such as but not limited to, an additional battery, external power supply, etc.) is required to temporarily activate the internal controller (not shown) of the power device 2.

Therefore, one of the features and effects of the present disclosure is that the charging cable 1 of the present disclosure combines all the charging/discharging products of the electric vehicle 200 so as to use a single universal charging cable 1 to match according to the different choices of the user, and can be used for requirements of different operation modes. Furthermore, the charging device 100 can provide a specific impedance to the electric vehicle 200 through the charging/discharging gun (i.e., the vehicle-side connector 1A) so that the electric vehicle 200 can confirm the usage status, operation mode, cable capacity of the charging cable 1, and other specification information so as to perform the charging or discharging function accordingly. In addition, the charging device 100 may further include functions of leakage protection, short-circuited protection, over-temperature protection, over-current protection, and grounding protection.

Furthermore, another feature and effect of the present disclosure is that the charging device 100 of the present disclosure uses the electric vehicle 200 to first supply power to the controller (not shown) inside the power device 2 through the charging cable 1 in the operation modes of V2L, V2H, and V2V, and after the controller (not shown) is activated, the switch is controlled to obtain a specific impedance so that the electric vehicle 200 can know the operation mode currently to be executed according to the specific impedance, and set and adjust the parameters accordingly. Therefore, the controller (not shown) inside the power device 2 can be activated without using an additional power source (such as but not limited to, a battery, an external power source, etc.), thereby saving equipment costs and improving convenience of use.

On the other hand, in FIG. 1A and FIG. 1B, the pluggable connector 1B of the charging cable 1 is preferably a male connector, and the device connector 2A of the power device 2 is preferably a female connector. The reason is that in the operation modes of M2 and M3, the supplying power Ps is provided to the connector of the power device 2 through the power device 2. Therefore, if the device connector 2A is a male connector, there is a risk of electric shock. On the contrary, in the operation modes of V2L, V2H, and V2V, the entire power device 2 needs to be connected perfectly, and after the communication is completed, the electric vehicle 200 will provide the supplying power Ps to the charging cable 1. Therefore, even if the pluggable connector 1B of the charging cable 1 is a male connector, it will not cause the risk of electric shock.

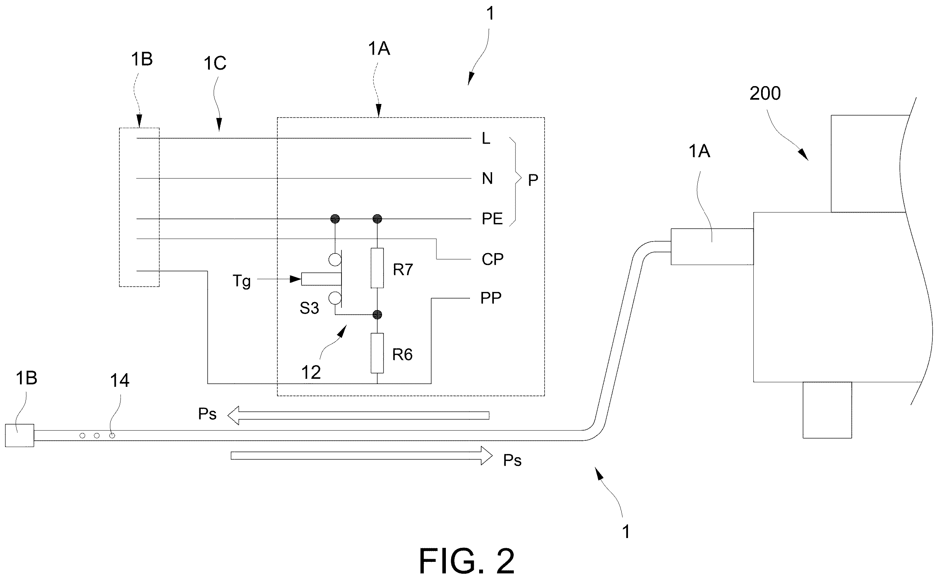

Please refer to FIG. 2, which shows a schematic diagram of an internal circuit of a charging cable according to the present disclosure, and also refer to FGI. 1A to FIG. 1B. In this embodiment, the connectors 1A, 1B and the cable 1C are illustrative examples of US standard wires, but are not limited to this. All specifications such as European standards and Japanese standards should be included in the scope of this embodiment. In the schematic diagram of FIG. 2, taking single-phase power as an example (three-phase power may be deduced by analogy), the cable 1C includes a live wire L, a ground wire N, a neutral wire PE, a control pilot wire CP, and a proximity pilot wire PP, and if not specifically stated, the live wire L, the ground wire N, and the neutral wire PE may be referred to as the power wire P in the following description. The power device 2 may be connected to the above-mentioned wires in the charging cable 1 by connecting the pluggable connector 1B through the device connector 2A, and the electric vehicle 200 may also be connected to the above-mentioned wires in the charging cable 1 by connecting the vehicle-side connector 1A. The vehicle-side connector 1A may further include a trigger circuit 12 (the circuit according to US standards is used as an illustrative example, other standards are not limited thereto), and the trigger circuit 12 is coupled between the power wire P and the proximity pilot wire PP.

The trigger circuit 12 generates impedance changes on the proximity pilot wire PP according to a trigger Tg, such as but not limited to user pressing, and the controller of the power device 2 or the electric vehicle 200 can confirm that the connection between the power device 2 and the electric vehicle 200 is completed according to the impedance changes on the proximity pilot wire PP. For example, the trigger circuit 12 may include resistors R6, R7 and a push switch S3, and one terminal of the resistor R6 is coupled to the proximity pilot wire PP. The other terminal of the resistor R6 is coupled to one terminal of the resistor R7, and the other terminal of the resistor R7 is coupled to the neutral wire PE of the power wire P. One terminal of the push switch S3 is coupled to a node between the resistors R6, R7, and the other terminal of the push switch S3 is coupled to the neutral wire PE. The detailed structure of the trigger circuit 12 described above is only an illustrative example and is not limited thereto. Any trigger circuit 12 that can change impedance should be included in the scope of this embodiment.

After the vehicle-side connector 1A is plugged into the electric vehicle 200, and the user has not yet pressed the push switch S3, the two terminals of the push switch S3 are short-circuited to short-circuit (connect) a path from the neutral wire PE to the node between the resistors R6, R7. Therefore, the resistor connecting the proximity pilot wire PP to the neutral wire PE is R6. When the user presses the push switch S3, the two terminals of the push switch S3 are disconnected to disconnect the path from the neutral wire PE to the node between the resistors R6, R7. Therefore, the resistor connecting the proximity pilot wire PP to the neutral wire PE is R6 plus R7. Finally, after the user releases the push switch S3, the resistor connecting the proximity pilot wire PP to the neutral wire PE returns to the resistor R6. Since the user presses the push switch S3 (i.e., the trigger Tg from pressing to releasing), the impedance connecting the proximity pilot wire PP to the neutral wire PE changes (i.e., the impedance changes), and therefore the fixed current on the proximity pilot wire PP and the changing impedance produce a voltage change, and the controller of the power device 2 or the electric vehicle 200 can confirm that the connection between the electric vehicle 200 and the vehicle-side connector 1A is completed through this voltage change.

On the other hand, the charging device 100 further includes an LED indicator light 14, and the LED indicator light 14 is disposed on the charging cable 1. The LED indicator light 14 is used to indicate whether the current flowing through the charging cable 1 is from the vehicle-side connector 1A to the pluggable connector 1B, or from the pluggable connector 1B to the vehicle-side connector 1A so that the user can easily know whether the charging cable 1 is operating in the charging mode or the discharging mode from the LED indicator light 14 on the charging cable 1. Moreover, by lighting up the LED indicator light 14 on the charging cable 1, it is also possible to prevent people from accidentally damaging the cable in the dark or causing people to trip and other accidental risks. In particular, the LED indicator light 14, for example but not limited to, lights up in sequence or gradually becomes brighter to generate a visual sense of direction so that the user can easily distinguish the direction of the current.

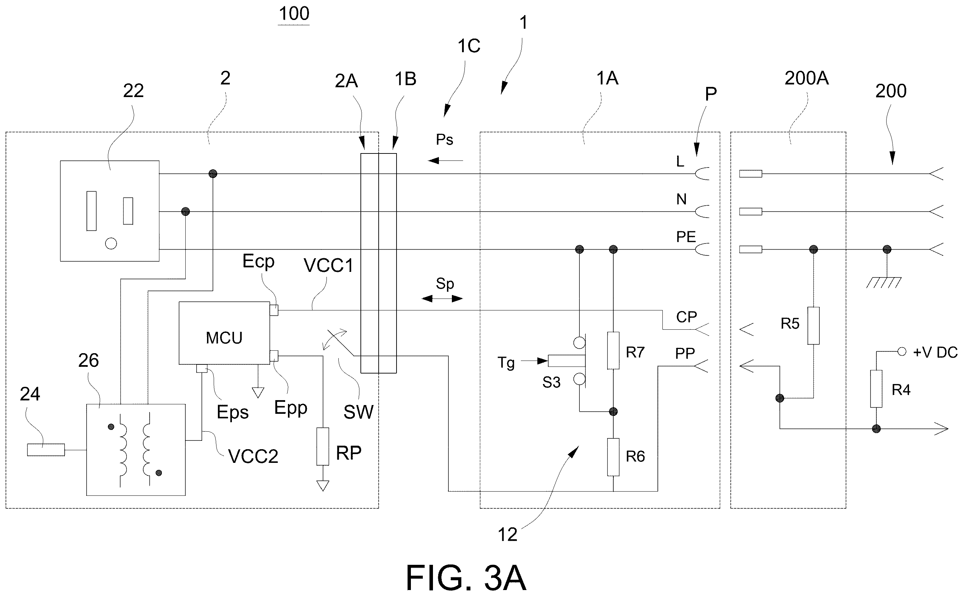

Please refer to FIG. 3A, which shows a schematic diagram of the universal charging device applied to an internal circuit for a V2L operation mode according to the present disclosure, and also refer to FIG. 1A to FIG. 2. The universal charging device 100 includes a charging cable 1 and a power device 2. One terminal of the charging cable 1 (i.e., a first connection device) is coupled to a device connector 2A of the power device 2 such as a socket through a pluggable connector 1B, and the other terminal is coupled to a vehicle connector 200A of an electric vehicle 200 (i.e., a first electric vehicle 200-1) through a vehicle-side connector 1A. Therefore, the power wire P (which may include a live wire L, a ground wire N, a neutral wire PE, and the three-phase power may be deduced accordingly), a control pilot wire CP, and a proximity pilot wire PP, and the proximity pilot wire PP may couple the power device 2 and the electric vehicle 200 through the pluggable connector 1B and the vehicle-side connector 1A.

The power device 2 includes a switch SW, a controller MCU, and a resistor RP, and may further include power output ports such as a socket port 22 and a USB port 24. The controller MCU includes a control pilot terminal Ecp, a proximity pilot terminal Epp, and a power receiving terminal Eps. In particular, the USB port 24 may preferably be a Type-C connection port, but is not limited to this. An AC-to-DC converter (not shown) may also be included inside the power socket to convert AC power into DC power. The power receiving terminal Eps of the controller MCU is coupled to the power wire P, and the control pilot terminal Ecp of the controller MCU is coupled to the control pilot wire CP. The resistor RP is coupled to the proximity pilot terminal Epp of the controller MCU, and one terminal of the switch SW is coupled to the proximity pilot wire PP. The controller MCU selectively controls the other terminal of the switch SW to couple the control pilot wire CP or the resistor RP, and when the controller MCU is disabled (i.e., the controller MCU has no power and does not work), the switch SW short-circuits the control pilot wire CP and the proximity pilot wire PP, thereby short-circuiting the contacts of the two wires of the vehicle-side connector 1A and the vehicle connector 200A.

When confirming that the electric vehicle 200 is connected to the power device 2, the electric vehicle 200 will provide a communication signal Sp through the control pilot wire CP to try to communicate with the controller MCU by handshaking. Therefore, when the controller MCU receives the communication signal Sp provided by the electric vehicle 200 through the control pilot wire CP, the controller MCU uses the energy of the communication signal Sp as a first working power VCC1 and is activated. When the controller MCU is activated, the controller MCU controls the switch SW to disconnect the control pilot wire CP and the proximity pilot wire PP, and the resistor RP is coupled to the proximity pilot wire PP through the action of the switch SW. When the resistor RP is coupled to the proximity pilot wire PP, the coupling of the resistor RP can change the impedance on the proximity pilot wire PP, and therefore the impedance on the proximity pilot wire PP can be adjusted to a specific impedance. The electric vehicle 200 can obtain a specific impedance through the proximity pilot wire PP, and according to the specific impedance, it is known that the operation mode currently to be executed is V2L, and the specification information is confirmed at the same time so as to set various parameters of the electric vehicle 200 for the power device 2 (such as but not limited to, the upper limit of the discharging current, the discharging time, etc.). That is, when the resistor RP is coupled to the proximity pilot wire PP, the voltage on its path is affected by the specific impedance formed by the resistors R6, R7 and the resistor RP to generate a specific voltage. Therefore, the electric vehicle 200 can know that the current mode needs to operate in the discharging mode of V2L according to the specific voltage.

On the other hand, the controller MCU can also change the operation mode of the charging device 100 by adjusting the impedance and the corresponding voltage on the proximity pilot wire PP. For example, but not limited to, when the discharging process of the electric vehicle 200 to the power device 2 is abnormal, the controller MCU can control the switch SW to disconnect the proximity pilot wire PP and the resistor RP. At this time, the electric vehicle 200 receives a specific voltage representing the abnormality of the device from the proximity pilot wire PP, and therefore the electric vehicle 200 interrupts the communication signal Sp transmitted to the control pilot wire CP to interrupt the handshake communication between the controller MCU and the electric vehicle 200. On the other hand, when the discharging process of the electric vehicle 200 to the power device 2 is abnormal, the controller MCU can selectively control the switch SW to short-circuit the control pilot wire CP and the proximity pilot wire PP, or continue to disconnect the control pilot wire CP and the proximity pilot wire PP, which does not affect the abnormality determination of the device.

When the user presses the push switch S3 to generate a trigger Tg so that the voltage on the proximity pilot wire PP to the neutral wire PE changes, the electric vehicle 200 and the controller MCU confirm that the connection between the electric vehicle 200 and the vehicle-side connector 1A is completed according to the voltage change. In addition, the controller MCU can communicate with the electric vehicle 200 by controlling the control pilot wire CP to handshake (i.e., transmit communication signals Sp to each other) to obtain and confirm power parameters such as, but not limited to, the size of the dischargeable current (this operation is generally after confirming the operation mode, but is not limited to this). Therefore, the controller MCU confirms that the connection between the electric vehicle 200 and the vehicle-side connector 1A is completed through the specific voltage and voltage change of the proximity pilot wire PP, and knows that the current mode needs to operate in the discharging mode of V2L, and the controller MCU also obtains power parameters by controlling the control pilot wire CP to communicate with the electric vehicle 200 by handshaking. Finally, when the above operation is completed, the controller MCU can control the electric vehicle 200 to provide supplying power Ps to the power wire P so that the power socket receives the supplying power Ps from the power wire P.

As shown in FIG. 3A, the power device 2 further includes a conversion circuit 26. The conversion circuit 26 is coupled between the power receiving terminal Eps and the power wire P, and the conversion circuit 26 is preferably a buck (step-down) converter. When the controller MCU completes the handshake communication with the electric vehicle 200 and controls the electric vehicle 200 to provide the supplying power Ps to the power wire P, the power device 2 can receive the supplying power Ps corresponding to the power parameters through the power wire P. Therefore, the conversion circuit 26 can receive the supplying power Ps on the power wire P and convert the supplying power Ps into a second working power VCC2. When the power device 2 receives the second working power VCC2 from the power receiving terminal Eps, the controller MCU changes a source of acquiring power from the first working power VCC1 to the second working power VCC2. Therefore, the electric vehicle 200 can use the charging cable 1 to first supply power to the controller MCU inside the power device 2 with the first working power VCC1, and after the controller MCU is activated, it is supplied power by the second working power VCC2, and the effect of activating without using an additional power source (such as but not limited to, a battery, an external power supply, etc.) can be achieved.

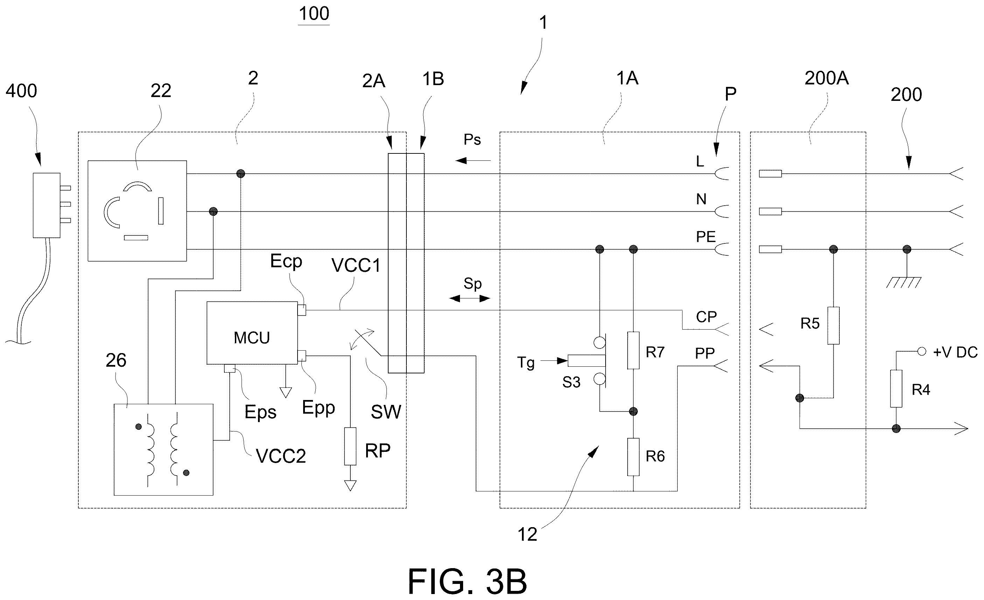

Please refer to FIG. 3B, which shows a schematic diagram of the universal charging device applied to an internal circuit for a V2H operation mode according to the present disclosure, and also refer to FIG. 1A to FIG. 3A. One terminal of the charging cable 1 (i.e., the first connection device) is coupled to the device connector 2A of the power device 2 such as the emergency power socket through the pluggable connector 1B, and the other terminal is coupled to the vehicle connector 200A of the electric vehicle 200 (i.e., the first electric vehicle 200-1) through the vehicle-side connector 1A. When the household AC power fails, the electric vehicle 200 can replace the generator and provide supplying power Ps to the socket port 22 to provide emergency backup power to a home 400. Since its circuit structure and operation manner are similar to FIG. 3A, the only difference is that it is mainly operated in the failure condition of the household AC power, and therefore its circuit structure and operation manner are not repeated.

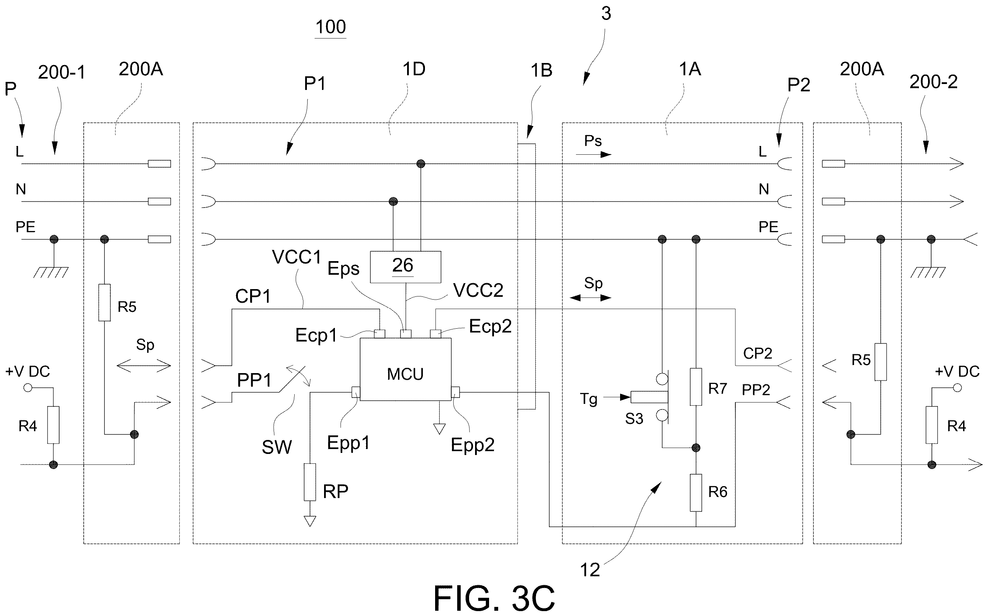

Please refer to FIG. 3C, which shows a schematic diagram of the universal charging device applied to an internal circuit for a V2V operation mode according to the present disclosure, and also refer to FIG. 1A to FIG. 3B. The difference between FIG. 3C and FIG. 3A, FIG. 3B is that FIG. 3C integrates the power device 2 and the charging cable 1 of FIG. 3A, FIG. 3B into a single module. That is, the charging cable 1 may be referred to as the first connection device, and the first connection device (i.e., the charging cable 1) and the power device 2 are integrated into an integrated vehicle-side connector 1D (hereinafter collectively referred to as the integrated vehicle-side connector 1D) as shown in FIG. 3C. Furthermore, the integrated vehicle-side connector 1D is used to couple the vehicle connector 200A of the first electric vehicle 200-1 that provides power. In addition, the charging device 100 further includes a second connection device, and the second connection device is a charging cable 3. The charging cable 3 is similar to the charging cable 1 described in FIG. 2, FIG. 3A, and FIG. 3B, and further includes a power wire, a control pilot wire, and a proximity pilot wire. In order to make a clear distinction, it is divided into the power wire P1, the control pilot wire CP1, and the proximity pilot wire PP1 of the first connection device, and the power wire P2, the control pilot wire CP2, and the proximity pilot wire PP2 of the charging cable 3. The vehicle-side connector 1A of the charging cable 3 is used to couple the second electric vehicle 200-2 that receives power, and the pluggable connector 1B of the charging cable 3 is coupled to the integrated vehicle-side connector 1D.

Furthermore, the controller MCU is similar to FIG. 3A and FIG. 3B, including a control pilot terminal and a proximity pilot terminal coupled to the first electric vehicle 200-1, and a power receiving terminal Eps. In addition, it further includes a control pilot terminal and a proximity pilot terminal coupled to the second electric vehicle 200-2. In order to clearly distinguish, it is divided into a first control pilot terminal Ecp1, a first proximity pilot terminal Epp1, a second control pilot terminal Ecp2, and a second proximity pilot terminal Epp2. The operation of the first control pilot terminal Ecp1and the first proximity pilot terminal Epp1 is similar to FIG. 3A and FIG. 3B, which also enables the electric vehicle 200-1 to know that the operation mode is a discharging mode of V2V according to a specific impedance, and the controller MCU can communicate with the first electric vehicle 200-1 through the first control pilot wire CP1 according to the discharging mode of V2V.

On the other hand, the controller MCU also sets the impedance of the second proximity pilot wire PP2 to another specific impedance so that the second electric vehicle 200-2 can confirm the specification information of the charging device 100 through another specific impedance. In particular, in order to clearly distinguish the specific impedances of the proximity pilot wires PP1, PP2, they are divided into a first specific impedance of the first proximity pilot wire PP1 and a second specific impedance of the second proximity pilot wire PP2. In particular, the value of the first specific impedance may be the same or different from the second specific impedance, as long as it can be used by the electric vehicles 200-1, 200-2 and/or the controller MCU to determine the discharging mode of V2V and confirm the specification information.

After the controller MCU sets the impedance of the second proximity pilot wire PP2 to the second specific impedance, the controller MCU communicates with the second electric vehicle 200-2 through the second control pilot wire CP2 (i.e., through the mutual transmission of the communication signal Sp) to obtain and confirm power parameters such as, but not limited to, the dischargeable current. Moreover, after the first electric vehicle 200-1, the second electric vehicle 200-2, and the controller MCU communicate and confirm the power parameters, the first electric vehicle 200-1 provides supplying power Ps to the second electric vehicle 200-2 through the integrated vehicle-side connector 1D and the charging cable 3. Please refer to FIG. 3C again, the charging cable 3 is similar to FIG. 2, and it may further include a trigger circuit 12, and the circuit structure and operation manner of the trigger circuit 12 are similar to FIG. 2 to FIG. 3B, which will not be repeated here.

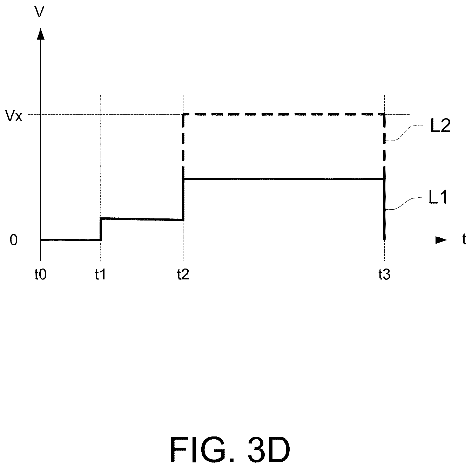

Please refer to FIG. 3D, which shows a schematic waveform timing diagram of the universal charging device operating in a discharging mode according to the present disclosure, and also refer to FIG. 1A to FIG. 3C. FIG. 3D may be used in conjunction with the operation of FIG. 3A to FIG. 3C. The solid line L1 represents one of the signals (voltages) on the control pilot wire CP and the proximity pilot wire PP, and the dotted line L2 represents the other signal (voltage). During time t0to time t1 the electric vehicle 200 is not yet connected to the charging device 100, and therefore the controller MCU is not activated, and the control pilot wire CP does not receive any signal, and the charging device 100 is not operated in the discharging modes of V2L, V2H, and V2V so that the signals (voltages) of the two are zero. During time t1 to time t2, the electric vehicle 200 is connected to the charging device 100, and the electric vehicle 200 provides a communication signal Sp to the control pilot terminal of the controller MCU through the control pilot wire CP. Since the switch SW short-circuits the control pilot wire CP and the proximity pilot wire PP when the controller MCU is not activated, the signals (voltages) on the control pilot wire CP and the proximity pilot wire PP are the same. At this time, since the controller MCU has not yet activated, the charging device 100 does not operate in the discharging mode of V2L, V2H, or V2V.

During time t2 to time t3, the controller MCU is activated, and the control switch SW turns on the resistor RP and the proximity pilot wire PP. Therefore, the signals (voltages) on the control pilot wire CP are different from the signals (voltages) on the proximity pilot wire PP, and the electric vehicle 200 can know that the operation mode currently to be operated is the discharging modes of V2L, V2H, and V2V according to the signals (voltages) on the proximity pilot wire PP. In particular, the change of the signals (voltages) on the proximity pilot wire PP will correspond to the resistance of the resistor RP. Therefore, it is assumed that the connection of the resistor RP causes the signals (voltages) on the proximity pilot wire PP to change to a specific potential Vx, the electric vehicle 200 can know that the operation mode currently to be operated is V2L. Finally, at time t3, the electric vehicle 200 is disconnected from the charging device 100, and therefore the signals (voltages) of the two are restored to zero again. In particular, the above-mentioned specific potential Vx is only an illustrative example. In fact, during time t2 to time t3, the signals (voltages) on the proximity pilot wire PP may be higher or lower than the signals (voltages) on the control pilot wire CP due to the operation mode, and therefore the heights of the solid line L1 and the dotted line L2 are not constant.

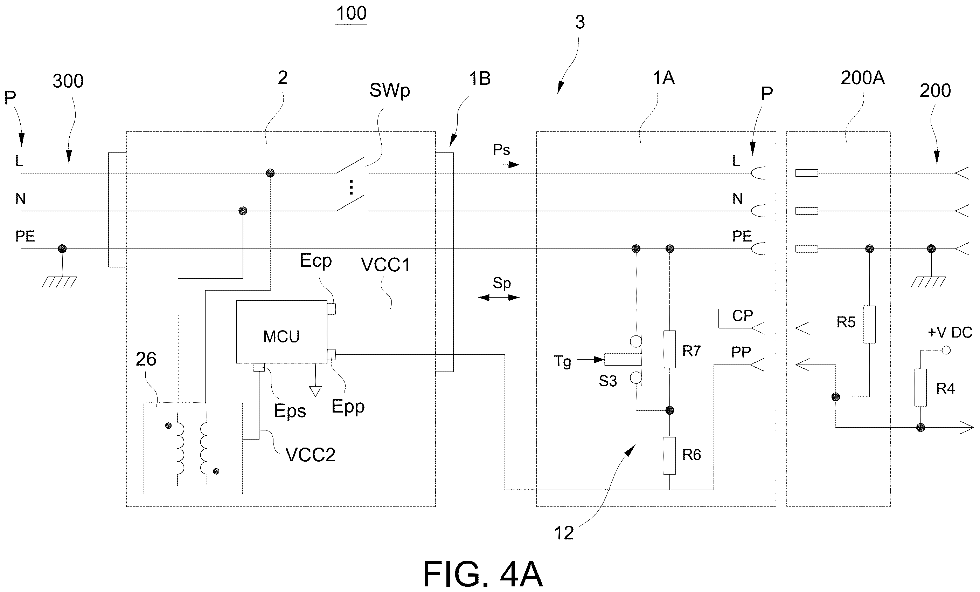

Please refer to FIG. 4A, which shows a schematic diagram of the universal charging device applied to an internal circuit for a M2 operation mode according to the present disclosure, and also refer to FIG. 1A to FIG. 3D. The charging device 100 of FIG. 4A includes a charging cable 3 and a power device 2 which may be, for example but not limited to, a charger such as IC-CPD, and the circuit structure of the charging cable 3 is similar to that of FIG. 3C. The power device 2 is coupled between the charging cable 3 and the extension plug 300, and the vehicle-side connector 1A of the charging cable 3 is connected to the electric vehicle 200. Furthermore, after the charging cable 3 is coupled to the electric vehicle 200 and the power device 2, the controller MCU changes the impedance of the proximity pilot wire PP to a specific impedance through the proximity pilot terminal Epp according to the charging mode of M2 so as to inform the electric vehicle 200 that the operation mode currently is the charging mode of M2 through the specific impedance. Furthermore, the controller MCU communicates with the electric vehicle 200 by handshaking (i.e., by mutual transmission of the communication signal Sp) through the control pilot wire CP to obtain and confirm power parameters such as, but not limited to, the magnitude of the dischargeable current. After the confirmation is completed, the controller MCU controls a power switch SWp to turn on to provide the supplying power Ps to supply power to the electric vehicle 200. In particular, in one embodiment, the power device 2 may selectively include a conversion circuit to convert a commercial power received by the extension plug 300 into a suitable supplying power Ps for charging the electric vehicle 200.

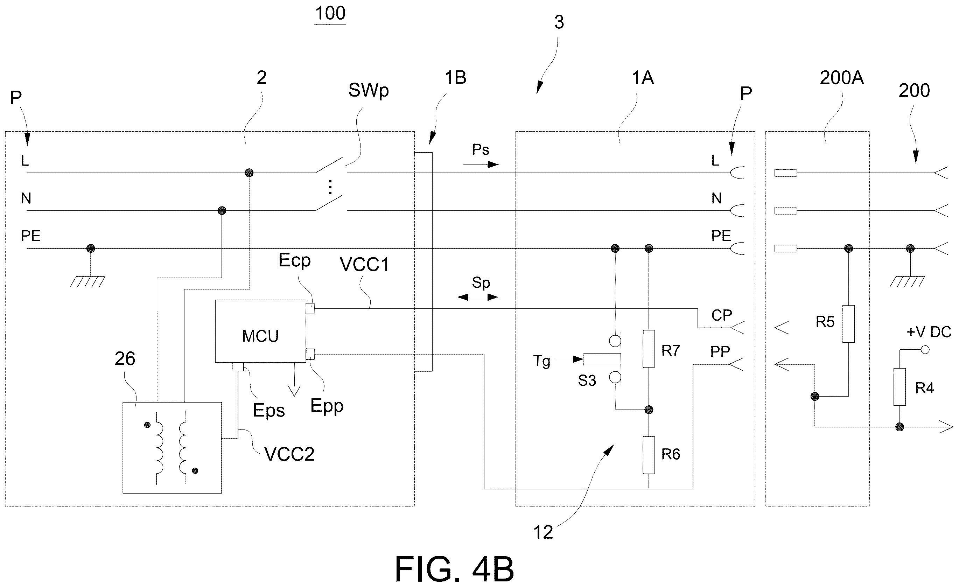

Please refer to FIG. 4B, which shows a schematic diagram of the universal charging device applied to an internal circuit for a M3 operation mode according to the present disclosure, and also refer to FIG. 1A to FIG. 4A. The charging device 100 of FIG. 4B includes a charging cable 3 and a power device 2, which may be, for example but not limited to, an AC charging pile or a wall-mounted charging device, and the circuit structure of the charging cable 3 is similar to that of FIG. 3C. The power device 2 is coupled to the charging cable 3, and the vehicle-side connector 1A of the charging cable 3 is connected to the electric vehicle 200. Moreover, after the circuit of FIG. 4B is operated similarly to FIG. 4A, the power device 2 provides the supplying power Ps to power the electric vehicle 200.

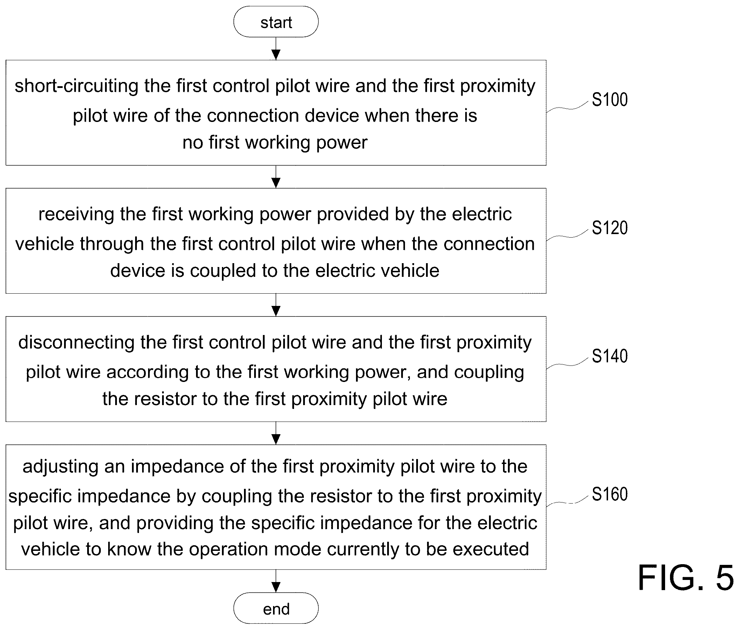

Please refer to FIG. 5, which shows a flowchart of a method of operating the charging device according to the present disclosure, and also refer to FIG. 1A to FIG. 4B. The operation method of the charging device is mainly to use the electric vehicle 200 to first supply power to an internal controller (not shown) of the power device 2 through the charging cable 1 in the operation modes of V2L, V2H, and V2V to perform subsequent charging and discharging operations. Specifically, the operation method of the charging device 100 includes short-circuiting the control pilot wire and the proximity pilot wire of the connection device (S100) when there is no first working power. A preferred embodiment is to use one terminal of the switch SW to couple the proximity pilot wire PP, and use the controller MCU to selectively control the other terminal of the switch SW to couple the control pilot wire CP or the resistor RP. When the controller MCU is disabled (that is, the controller MCU has no power and does not work), the switch SW is preset to short-circuit the control pilot wire CP and the proximity pilot wire PP by short-circuiting the contacts of the two wires of the vehicle-side connector 1A and the vehicle connector 200A. In particular, the connection device may be a charging cable 1, but it is not limited to this, and it may also be a device such as the connector 1A shown in FIG. 3C.

Afterward, when the connecting device is coupled to the electric vehicle, the first working power provided by the electric vehicle is received through the control pilot wire (S120). When the controller MCU receives the communication signal Sp provided by the electric vehicle 200 through the control pilot wire CP, the controller MCU uses the energy of the communication signal Sp as the first working power VCC1 and is activated. Afterward, according to the first working power, the first control pilot wire and the first proximity pilot wire are disconnected, and the resistor is coupled to the first proximity pilot wire (S140). When the controller MCU is enabled, the controller MCU controls the switch SW to disconnect the control pilot wire CP and the proximity pilot wire PP, and the resistor RP is coupled to the proximity pilot wire PP through the action of the switch SW.

Finally, the impedance of the first proximity pilot wire is adjusted to a specific impedance by coupling the resistor to the first proximity pilot wire, and the specific impedance is provided for the electric vehicle to know the operation mode currently to be executed (S160). When the resistor RP is coupled to the proximity pilot wire PP, the coupling of the resistor RP can change the impedance on the proximity pilot wire PP, and therefore the impedance on the proximity pilot wire PP may be adjusted to a specific impedance. The electric vehicle 200 obtains a specific impedance through the proximity pilot wire PP, and knows the operation mode currently to be executed according to the specific impedance, and confirms the specification information at the same time so as to set various parameters of the electric vehicle 200 for the power device 2 (such as but not limited to, the upper limit of the discharging current, the discharging time, etc.). In particular, in one embodiment, the detailed operation method of the charging device may be referred to in conjunction with FIG. 1A to FIG. 4B, or inferred from the contents disclosed in FIG. 1A to FIG. 4B, and will not be repeated here.

Although the present disclosure has been described with reference to the preferred embodiment thereof, it will be understood that the present disclosure is not limited to the details thereof. Various substitutions and modifications have been suggested in the foregoing description, and others will occur to those of ordinary skill in the art. Therefore, all such substitutions and modifications are intended to be embraced within the scope of the present disclosure as defined in the appended claims.

## Claims

1. A charging device comprising a first connection device, the first connection device comprising a first power wire, a first control pilot wire, and a first proximity pilot wire; a first terminal of the first power wire, a first terminal of the first control pilot wire, and a first terminal of the first proximity pilot wire coupled to a first electric vehicle, and the charging device further comprising:
a power device coupled to a second terminal of the first power wire, a second terminal of the first control pilot wire, and a second terminal of the first proximity pilot wire, and the power device comprising:
a switch coupled to the first proximity pilot wire,
a controller coupled to the first power wire and the first control pilot wire, and when the controller being disabled, the switch configured to short-circuit the first control pilot wire and the first proximity pilot wire, and
a resistor coupled to the controller,
wherein when the controller is activated by receiving a first working power provided by the first electric vehicle through the first control pilot wire, the controller is configured to control the switch to disconnect the first control pilot wire and the first proximity pilot wire, and the resistor is coupled to the first proximity pilot wire through the action of the switch to adjust an impedance of the first proximity pilot wire to a first specific impedance, and the first specific impedance is provided for the first electric vehicle to know an operation mode currently to be executed.

2. The charging device as claimed in claim 1, wherein the controller comprises:
a first control pilot terminal coupled to the first control pilot wire, and the controller configured to communicate with the first electric vehicle by handshaking through the first control pilot terminal to obtain a power parameter,
a first proximity pilot terminal coupled to the resistor, and coupled to the first proximity pilot wire by turning on the switch, and
a power receiving terminal coupled to a conversion circuit of the power device,
wherein the power device is configured to receive a supplying power corresponding to the power parameter through the first power wire, and the conversion circuit is configured to convert the supplying power into a second working power; when the power device receives the second working power from the power receiving terminal, the controller is configured to change a source of acquiring power from the first working power to the second working power.

3. The charging device as claimed in claim 1, wherein when an operation of the charging device is abnormal, the controller is configured to control the switch to disconnect the first proximity pilot wire and the resistor to interrupt the handshake communication with the first electric vehicle.

4. The charging device as claimed in claim 1, wherein the power device is a power socket, and the first specific impedance is provided for the first electric vehicle to know that the operation mode is a vehicle-to-load mode so that the controller communicates with the first electric vehicle by handshaking through the first control pilot wire in the vehicle-to-load mode, and the first electric vehicle supplies power to the power socket.

5. The charging device as claimed in claim 1, wherein the power device is an emergency power socket, and the first specific impedance is provided for the first electric vehicle to know that the operation mode is a vehicle-to-home mode so that the controller communicates with the first electric vehicle by handshaking through the first control pilot wire in the vehicle-to-home mode, and the first electric vehicle supplies power to the emergency power socket.

6. The charging device as claimed in claim 1, wherein the first connection device further comprises:
a trigger circuit coupled to the first power wire and the first proximity pilot wire, and configured to generate an impedance change in the first proximity pilot wire according to a trigger,
wherein the controller is configured to confirm that a connection between the power device and the first electric vehicle is completed according to the impedance change.

7. The charging device as claimed in claim 1, further comprising:
a second connection device comprising a second power wire, a second control pilot wire, and a second proximity pilot wire; a first terminal of the second power wire, a first terminal of the second control pilot wire, and a first terminal of the second proximity pilot wire coupled to a second electric vehicle, and a second terminal of the second power wire, a second terminal of the second control pilot wire, and a second terminal of the second proximity pilot wire coupled to the power device,
wherein the first specific impedance is provided for the first electric vehicle to know that the operation mode is a vehicle-to-vehicle mode so as to communicate with the first electric vehicle by handshaking through the first control pilot wire according to the vehicle-to-vehicle mode, and the controller is enabled to communicate with the second electric vehicle by handshaking through the second control pilot wire in the vehicle-to-vehicle mode, and the first electric vehicle supplies power to the second electric vehicle.

8. The charging device as claimed in claim 7, wherein the controller comprises:
a second control pilot terminal coupled to the second control pilot wire, and the controller configured to communicate with the second electric vehicle by handshaking through the second control pilot terminal, and
a second proximity pilot terminal coupled to the second proximity pilot wire, and the controller configured to set an impedance of the second proximity pilot wire to a second specific impedance, and the second specific impedance provided for the second electric vehicle to confirm specification information of the charging device.

9. The charging device as claimed in claim 7, wherein the second connection device further comprises:
a trigger circuit coupled to the second power wire and the second proximity pilot wire, and configured to generate an impedance change in the second proximity pilot wire according to a trigger,
wherein the controller is configured to confirm that a connection between the power device and the second electric vehicle is completed according to the impedance change.

10. The charging device as claimed in claim 1, further comprising:
an LED indicator light disposed on the first connection device, and configured to indicate a current direction of a current flowing through the first connection device.

11. A method of operating a charging device, the charging device comprising a first connection device and a power device, the power device comprising a resistor, and the method comprising steps of:
short-circuiting a first control pilot wire and a first proximity pilot wire of the first connection device when there is no first working power,
receiving the first working power provided by a first electric vehicle through the first control pilot wire when the first connection device is coupled to the first electric vehicle,
disconnecting the first control pilot wire and the first proximity pilot wire according to the first working power, and coupling the resistor to the first proximity pilot wire, and
adjusting an impedance of the first proximity pilot wire to a first specific impedance by coupling the resistor to the first proximity pilot wire, and providing the first specific impedance for the first electric vehicle to know the operation mode currently to be executed.

12. The method of operating the charging device as claimed in claim 11, wherein the charging device comprises a conversion circuit, and the method comprises steps of:
communicating with the first electric vehicle by handshaking through the first control pilot terminal to obtain a power parameter,
receiving a supplying power corresponding to the power parameter through a first power wire of the first connection device,
controlling the conversion circuit to convert the supplying power into a second working power, and
changing a source of acquiring power from the first working power to the second working power when the second working power is received.

13. The method of operating the charging device as claimed in claim 11, further comprising steps of:
determining that an operation of the charging device is abnormal, and
disconnecting the first proximity pilot wire and the resistor to interrupt the handshake communication with the first electric vehicle.

14. The method of operating the charging device as claimed in claim 11, further comprising steps of:
providing the first specific impedance for the first electric vehicle to know the operation mode currently is a vehicle-to-load mode or a vehicle-to-home mode,
communicating with the first electric vehicle by handshaking through the first control pilot wire according to the vehicle-to-load mode or the vehicle-to-home mode, and
supplying power from the first electric vehicle to the power device after the handshake communication is completed.

15. The method of operating the charging device as claimed in claim 11, further comprising steps of:
generating an impedance change in the first proximity pilot wire according to a trigger, and
confirming that a connection between the power device and the first electric vehicle is completed according to the impedance change.

16. The method of operating the charging device as claimed in claim 11, wherein the charging device comprises a second connection device for coupling to a second connection device, and the method comprises steps of:
providing the first specific impedance for the first electric vehicle to know the operation mode currently is a vehicle-to-vehicle mode, and communicating with the first electric vehicle by handshaking through the first control pilot wire according to the vehicle-to-vehicle mode,
communicating with the second electric vehicle by handshaking through a second control pilot wire of the second connection device according to the vehicle-to-vehicle mode, and
supplying power from the first electric vehicle to the second electric vehicle after the handshake communication is completed.

17. The method of operating the charging device as claimed in 16, further comprising a step of:
setting an impedance of a second proximity pilot wire of the second connection device to a second specific impedance, and providing the second specific impedance for the second electric vehicle to confirm specification information of the charging device.

18. The method of operating the charging device as claimed in 17, further comprising steps of:
generating an impedance change in the second proximity pilot wire according to a trigger, and
confirming that a connection between the power device and the second electric vehicle is completed according to the impedance change.
